# EUROPEAN PATENT APPLICATION

(11) **EP 4 753 197 A1**
(43) Date of publication of application: **03.06.2026**
(21) Application number: 25169378.4
(22) Date of filing: 09.04.2025
(51) Int. Cl.: H04L 5/00, H04L 1/08, H04L 27/26, H04W 72/04, H04W 84/12

(54) **WIRELESS COMMUNICATION METHOD, WIRELESS DEVICE AND COMPUTER STORAGE MEDIUM**

(30) Priority: 28.11.2024 CN 202411733261
(71) Applicant: Amlogic (Shanghai) Co., Ltd., Shanghai 201315 (CN)
(72) Inventor: XU, Yanchao, Shanghai 201315 (CN); YU, Ching Hwa, Shanghai 201315 (CN)
(74) Representative: karo IP

(57) **Abstract**

The present disclosure discloses a wireless communication method, a wireless device and a computer storage medium. The wireless communication method includes generating a protocol data unit PPDU and performing a frequency domain resource duplication on the protocol data unit PPDU in units of a resource unit RU to obtain a final protocol data unit PPDU. This method can effectively solve the problem of narrowband interference caused by HB BLE devices to wireless devices.

## Description

### FIELD

The present application relates to the field of wireless communication, and more particularly, to a wireless communication method, a wireless device and a computer storage medium.

### BACKGROUND

Currently, a Bluetooth Low Energy (BLE) protocol runs on the 2.4GHz frequency band. In the future, a BLE device can run on Higher Bands (HBs), such as frequency bands of 5GHz and 6GHz. Under current spectrum resource management, different regulatory areas have different requirements. In order to enable these HB BLE devices to comply with regulatory requirements, the channel access mechanism for the HB BLE will be different from that for traditional BLE devices operating in the 2.4GHz band. For example, the channel access for the HB BLE device adopts Frame-Based Listen Before Talk (FB-LBT).

However, the 5GHz/6GHz band is an unlicensed spectrum, and can be used, when corresponding regulatory requirements are satisfied, by other wireless technologies, for example, Wi-Fi devices. Generally, current Wi-Fi devices operating at 5GHz/6GHz generally use relatively high bandwidth, such as a bandwidth (BW) of 80MHz or 160MHz. The high bandwidth of Wi-Fi causes that it is easier for a working channel for the HB BLE device at some time instant to fall within the working bandwidth for Wi-Fi, causing narrowband interference to a receiving end of the Wi-Fi.

### SUMMARY

The present disclosure is intended to solve at least one of the technical problems existing in the prior art. Therefore, a first aim of the present disclosure is to provide a wireless communication method. This method can effectively solve the problem of narrowband interference caused by HB BLE devices to wireless devices.

A second aim of the present disclosure is to provide a wireless device.

A third aim of the present disclosure is to provide a computer storage medium.

To solve the above problems, an embodiment in a first aspect of the present disclosure provides a wireless communication method. The wireless communication method includes: generating a protocol data unit PPDU; and performing a frequency domain resource duplication on the protocol data unit PPDU in units of a resource unit RU to obtain a final protocol data unit PPDU.

According to the wireless communication method of the embodiment of the present disclosure, the frequency domain resource duplication is performed on the protocol data unit PPDU in units of the resource unit RU. In this way, multiple resource units RUs carry the same data, so that even if any resource unit RU is subject to narrowband interference, the receiving end can still receive complete data through another resource unit RU.

In some embodiments, the protocol data unit PPDU at least includes a data field. The performing the frequency domain resource duplication on the protocol data unit PPDU in units of the resource unit RU includes performing a frequency domain resource duplication the data field in units of the resource unit RU.

In some embodiments, the resource unit RU includes a resource unit RU with size information of 106, a resource unit RU with size information of 242, and/or a resource unit RU with size information of 484.

In some embodiments, when the frequency domain resource duplication is performed on the protocol data unit PPDU in units of the resource unit RU, data duplicated in each resource unit RU is the same.

In some embodiments, the wireless communication method is applied in a wireless device. The wireless device is distributed with multiple resource units RUs. The performing the frequency domain resource duplication on the protocol data unit PPDU in units of the resource unit RU includes dividing the multiple resource units RUs into groups, data duplicated in each resource unit RU in each group being the same.

In some embodiments, all resource units RUs in each group are continuous with each other in frequency domain.

In some embodiments, all resource units RUs in each group are discontinuous with each other in frequency domain.

In some embodiments, dividing the multiple resource units RUs into groups includes dividing the multiple resource units RUs into groups according to size information of the resource units RUs.

In some embodiments, the wireless communication method is applied in a wireless device, the data field includes N data segments, and a bandwidth occupied by each data segment is a working bandwidth of the wireless device. The performing the frequency domain resource duplication on the protocol data unit PPDU in units of the resource unit RU includes performing a frequency domain resource duplication on M data segments in the protocol data unit PPDU in units of the resource unit RU, where 1≤M≤N.

In some embodiments, when 1<M, pieces of size information of resource units RUs used for different data segments are the same or different.

In some embodiments, when the frequency domain resource duplication is performed on the M data segments in the protocol data unit PPDU in units of the resource unit RU, a frequency domain resource duplication is performed on a single data segment in units of a resource unit RU with at least one piece of size information.

In some embodiments, the protocol data unit PPDU includes preamble puncture information, the method further includes: before performing the frequency domain resource duplication on the protocol data unit PPDU in units of the resource unit RU, determining usable size information of the resource unit RU based on the preamble puncture information.

In some embodiments, a bandwidth occupied by the protocol data unit PPDU is greater than or equal to BW 80MHz.

An embodiment in a second aspect of the present disclosure provides a wireless device. The wireless device includes at least one processor and a memory in communicative connection with the at least one processor. The memory stores a computer program that is executable by the at least one processor. The computer program when executed by the at least one processor, implements the wireless communication method in any of the above embodiments.

In the wireless device according to the embodiment of the present disclosure, the computer program is executed by the processor so as to implement the wireless communication method in any of the above embodiments. It can effectively solve the problem of narrowband interference caused by HB BLE devices on the the Wi-Fi receiving end.

An embodiment of a third aspect of the present disclosure provides a computer storage medium in which a computer program is stored. The computer program when executed by a processor implements the wireless communication method in any of the above embodiments.

Additional aspects and advantages of the present disclosure will be given partially in the following description, and will become apparent partially from the following description, or will be known from the practice of the present disclosure.

### BRIEF DESCRIPTION OF THE DRAWINGS

The above and/or additional aspects and advantages of the present disclosure will become apparent and readily comprehensible from the description of the embodiments in conjunction with the following drawings.
FIG. 1 is a schematic diagram of a narrowband interference caused by a BLE device to a Wi-Fi device.
FIG. 2 is a schematic diagram of a PPDU that is subject to frequency domain resource duplication.
FIG. 3 is a flow chart of a wireless communication method according to an embodiment of the present disclosure.
FIG. 4 represents schematic diagrams of PPDUs according to an embodiment of the present disclosure.
FIG. 5 represents schematic diagrams of DUP PPDUs according to an embodiment of the present disclosure.
FIG. 6 is a schematic diagram of a DUP PPDU according to another embodiment of the present disclosure.
FIG. 7 represents schematic diagrams of DUP PPDUs according to another embodiment of the present disclosure.
FIG. 8 represents schematic diagrams of DUP PPDUs according to another embodiment of the present disclosure.
FIG. 9 is a schematic diagram of a DUP PPDU according to another embodiment of the present disclosure.
FIG. 10 is a block diagram showing a structure of a wireless device according to an embodiment of the present disclosure.

Reference numerals:
wireless device 10; processor 1; memory 2.

### DETAILED DESCRIPTION

Embodiments of the present disclosure will be described in detail below. Embodiments described with reference to the attached drawings are illustrative.

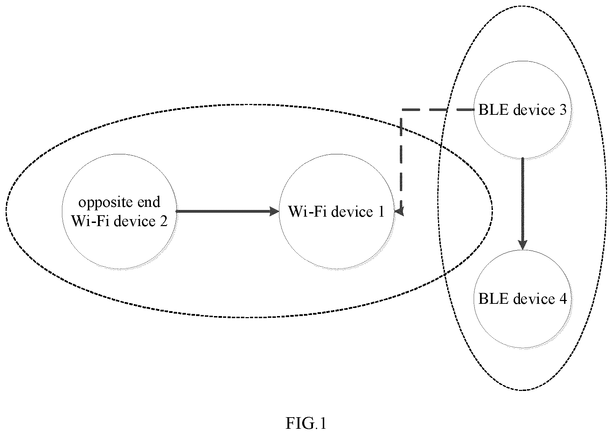

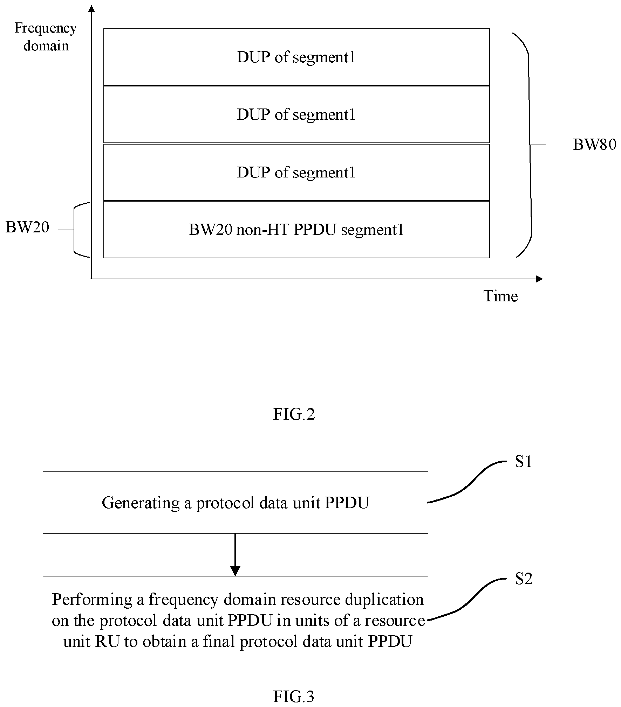

In the format of a current traditional 802.11 non high throughput (non-HT) DUP PPDU , duplication in the frequency domain resource is allowed to be performed based on a bandwidth of 20MHz as a unit. As shown in FIG. 1, there are HB BLE devices around a Wi-Fi device 1. Because these BLE devices cannot listen to data sent by a Wi-Fi device 2, the BLE devices may perform BLE data interaction when the Wi-Fi device 2 is sending data, which results in a narrowband interference to the Wi-Fi device 1. FIG. 2 shows a 802.11 non-HT DUP PPDU with BW 80, which equates to four duplicates of non-HT PPDUs with BW 20 in the frequency domain resource. Under this type of non-HT DUP PPDU, modulation/encoding/spatial stream at the physical layer used by the part that is duplicated must still be the same as those for the traditional non-HT format, that is, the ability is limited. However, in 802.11be, a format of Extreme High Throughput (EHT) DUP PPDU using 802.11be is defined. In this type of EHT DUP PPDU, after the modulation/coding/spatial stream at the physical layer is defined, the duplication rule for the frequency domain source is defined as follows. For EHT DUP PPDU with BW80, a duplication unit is 484-tone RU; for EHT DUP PPDU with BW160, a duplication unit is 996-tone RU; and for EHT DUP PPDU with BW320, a duplication unit is 2x996-tone RU. Within the limits of this EHT, there are only three duplication rules.

To solve the problem above, an embodiment in a first aspect of the present disclosure provides a wireless communication method. The method can effectively solve the problem of narrowband interference caused by the HB BLE device to the wireless device.

The wireless communication method according to the embodiment of the present disclosure will be described below with reference to FIG.3. As shown in FIG.3, the method includes step S1 to step S2. Specific steps are described as follows.

At step S1, a protocol data unit PPDU is generated.

Specifically, before data transmission is performed, data to be transmitted is encapsulated as PPDU. That is, a protocol data unit PPDU is generated.

At step S2, a frequency domain resource duplication on the protocol data unit PPDU is performed in units of a resource unit RU to obtain a final protocol data unit PPDU.

In related technology, in the format of the current traditional 802.11 non high throughput (non-HT) DUP PPDU, duplication in units of a fixed bandwidth is allowed in the frequency domain resource. Alternatively, in 802.11be, a format of Extreme High Throughput (EHT) DUP PPDU using 802.11be is defined. In this EHT DUP PPDU, the duplication rule for the frequency domain source is defined as follows. For EHT DUP PPDU with BW80, a duplication unit is 484-tone RU; for EHT DUP PPDU with BW160, a duplication unit is 996-tone RU; and for EHT DUP PPDU with BW320, a duplication unit is 2x996-tone RU. However, the ability of modulation/encoding/spatial stream at the physical layer is limited in the above ways.

Specifically, in the present disclosure, in order to solve the above problem, an original protocol data unit PPDU is firstly generated, and then a frequency domain resource duplication on the original protocol data unit PPDU is performed in units of a resource unit RU, so as to obtain a final protocol data unit PPDU after the duplication is completed, that is, 802.11 DUP PPDU can carry the same data in different frequency bands. In this way, even if any resource unit RU is subject to narrowband interference, the receiving end can still receive complete data through another resource unit RU. Furthermore, by the duplication rule of frequency domain resource duplication in units of the resource unit RU, an 802.11 DUP PPDU can use modulation/encoding/spatial stream at the physical layer allowed at any non-DUP PPDU, 802.11 DUP PPDU can be used in Downlink transmission from an AP device to an STA device and/or Uplink transmission from an STA device to an AP device, or 802.11 DUP PPDU can be used in the transmission of a single user (SU) PPDU between an AP device and an STA device, and/or the transmission of a multi-user PPDU between an AP device and an STA device.

According to the wireless communication method of the embodiment of the present disclosure, the frequency domain resource duplication is performed on the protocol data unit PPDU in units of the resource unit RU. In this way, multiple resource units RUs carry the same data, so that even if any resource unit RU is subject to narrowband interference, the receiving end can still receive complete data through another resource unit RU.

In some embodiments, the protocol data unit PPDU at least includes a data field. The performing the frequency domain resource duplication on the protocol data unit PPDU in units of the resource unit RU includes performing a frequency domain resource duplication the data field in units of the resource unit RU.

Specifically, a part of the PPDU that is subject to the frequency domain resource duplication can only be limited to the data field of the PPDU. Other fields or PPDU PHY Headers are still consistent with the current 802.11 protocol. The mode in which the frequency domain resource duplication is performed on the data filed in units of the resource unit RU is indicated by relevant information bits carried by the PHY Header of the final protocol data unit PPDU i.e., 802.11 DUP PPDU. Because the PHY Header of the 802.11 DUP PPDU is not duplicated in the frequency domain, the receiving end can normally receive the PHY Header of the 802.11 DUP PPDU in the traditional manner. By parsing related information fields in PHY Header, the receiving end can obtain information about the mode in which frequency domain resource duplication is performed on the data field in units of the resource unit RU, and thus can parse the subsequent data field based on this information.

In some embodiments, the resource unit RU includes a resource unit RU with size information of 106 i.e., 106-tone RU, a resource unit RU with size information of 242 i.e., 242-tone RU and/or a resource unit RU with size information of 484 i.e., 484-tone RU.

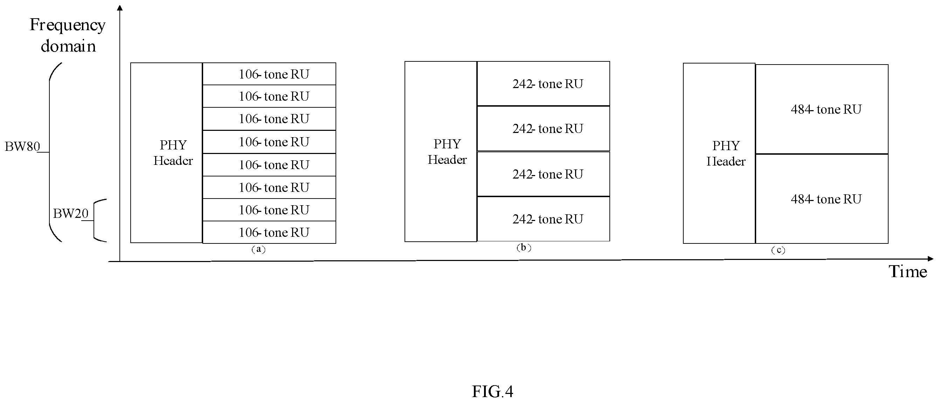

Specifically, the size information indicates the size of bandwidth occupied by a single resource unit RU, and is represented by the number of sub-carriers contained in the resource unit RU. The size information of the minimum RU unit for frequency domain resource duplication can be limited to: 106-tone RU; or 106-tone RU and/or 242-tone RU; or 106-tone RU and/or 242-tone RU and/or 484-tone RU. FIG.4 shows three BW80 DUP PPDUs. The PPDU in (a) of FIG.4 is subject to resource duplication in a 106-tone RU as a smallest RU, the PPDU in (b) of FIG. 4 is subject to resource duplication in a 242-tone RU as a smallest RU and the PPDU in (c) of FIG. 4 is subject to resource replication in a 484-tone RU as a smallest RU.

In some embodiments, when the frequency domain resource duplication is performed on the protocol data unit PPDU in units of the resource unit RU, data duplicated in each resource unit RU is the same.

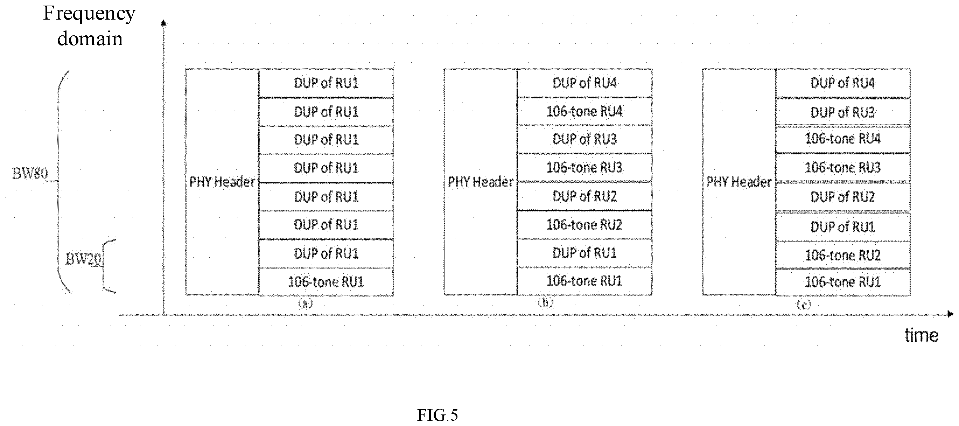

Specifically, FIG.5 shows three DPU PPDUs of BW 80MHz. In the DUP PPDUs in (a) of FIG. 5 the same data is duplicated in all 106-tone RUs, that is, data of each DUP of RU1 is a duplicate of data of 106-tone RU. In the DUP PPDUs in (b) of FIG. 5, data of DUP of RU1 is a duplicate of data of 106-tone RU1, data of DUP of RU2 is a duplicate of data of 106-tone RU2, and data of DUP of RU3 is a duplicate of data of 106-tone RU3. In a similar fashion, the same duplication principle can be applied in the DUP PPDU in (c) of FIG. 5.

In some embodiments, the wireless communication method above is applied in a wireless device. The wireless device is distributed with multiple resource units RUs. The performing the frequency domain resource duplication on the protocol data unit PPDU in units of the resource unit RU includes dividing the multiple resource units RUs into groups, data duplicated in each resource unit RU in each group being the same.

Specifically, FIG. 5 shows three DUP PPDUs of BW 80MHz. In (b) and (c) of FIG. 5, all 106-tone RUs are divided into 4 groups which are respectively a 106-tone RU1, a 106-tone RU2, a 106-tone RU3 and a 106-tone RU4. Data duplicated in each resource unit RU in each group are the same, that is, data of the 106-tone RU1 and data of DUP of RU1 are the same, data of the 106-tone RU2 and data of DUP of RU2 are the same, data of the 106-tone RU3 and data of DUP of RU3 are the same, and data of the 106-tone RU4 and data of DUP of RU4 are the same. Multiple resource units RUs can be divided into groups according to size information or bandwidth requirements, and no specific restrictions are made here.

In some embodiments, all resource units RUs in each group are continuous in frequency domain.

Specifically, as shown in FIG.5, all 106-tone RUs in the DUP PPDU in (b) of FIG. 5 are divided into four groups which are respectively a 106-tone RU1, a 106-tone RU2, a 106-tone RU3 and a 106-tone RU4. Data duplicated in each resource unit RU in each group are the same, and all resource units RUs in each group are continuous with each other in frequency domain. For example, the 106-tone RU1 and the DUP of RU1 are continuous.

In some embodiments, all resource units RUs in each group are discontinuous with each other in frequency domain.

Specifically, as shown in FIG.5, all 106-tone RUs in the DUP PPDU in (c) of FIG. 5 are divided into four groups. Data duplicated in each resource unit RU in each group are the same, all resource units RUs in each group are discontinuous in frequency domain and are separated by a fixed frequency domain range. For example, the 106-tone RU3 and DUP of RU3 are discontinuous, are separated by the 106-tone RU4.

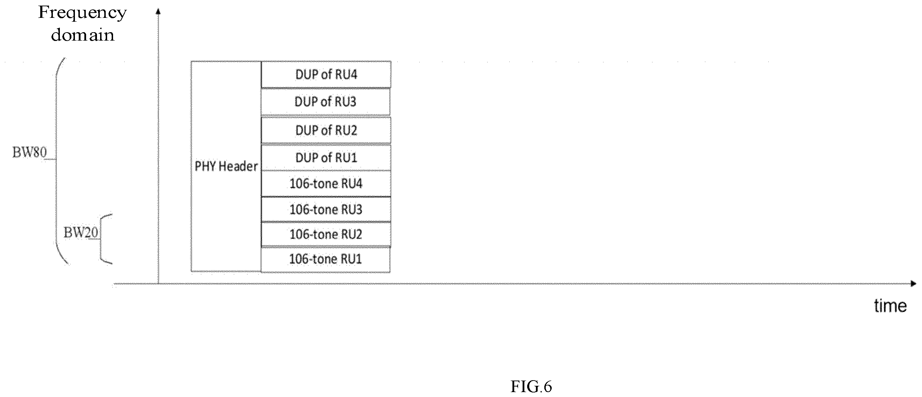

Resource units RUs are separated by a fixed frequency domain range which can be selected according to an actual situation and is not limited here. Exemplary, as show in FIG.6, all 106-tone RUs are divided into four groups. Data duplicated in each resource unit RU in each group is the same, and all resource units RUs in each group are discontinuous with each other in frequency domain. The 106-tone RU3 and DUP of RU3 are discontinuous with each other and are separated by DUP of RU2, DUP of RU1 and the 106-tone RU4.

In some embodiments, dividing the multiple resource units RUs into groups includes dividing the multiple resource units RUs into groups according to size information of the resource units RUs.

Specifically, the multiple resource units RUs can be divided into groups according to the size information of the resource units RUs. For example, the resource units RUs are divided into a 106-tone RU group, a 242-tone RU group and a 484-tone RU group.

In some embodiments, the wireless communication method above is applied in a wireless device. The data field includes N data segments. A bandwidth occupied by each data segment is a working bandwidth of the wireless device. The performing the frequency domain resource duplication on the protocol data unit PPDU in units of the resource unit RU includes performing a frequency domain resource duplication on M data segments in the protocol data unit PPDU in units of the resource unit RU, where 1≤M≤N.

Specifically, each data segment of the protocol data unit PPDU can be independently subject to the frequency domain duplication of the resource unit RU. Optionally, for an 802.11DUP PPDU that contains N data segments, only one of these data segments can be duplicated in the resource unit RU in the frequency domain. Alternatively two, three, more or all data segments are duplicated in the resource unit RU in the frequency domain and these multiple data segments are not needed to be continuous with each other in the frequency domain. Exemplary, if the protocol data unit PPDU contains multiple data segments, the multiple data segments can be discontinuous with each other in the frequency domain. A PPDU including four data segments of BW 80MHz is taken as an example. The four data segments are BW80 Seg1, BW80 Seg2, BW80 Seg3, and BW80 Seg4 in this order. Bandwidth occupied by each data segment is BW 80MHz. When the frequency domain resource duplication is performed, only one of BW 80MHz Seg1, BW 80MHz Seg2, BW 80MHz Seg3 and BW 80MHz Seg4 can be duplicated in the frequency domain, or some or all data segments of BW 80MHz Seg1, BW 80MHz Seg2, BW 80MHz Seg3 and BW 80MHz Seg4 can be duplicated in the frequency domain. For example, BW 80MHz Seg1 and BW 80MHz Seg4 can be duplicated, but BW 80MHz Seg2 and BW 80MHz Seg3 are not duplicated. BW 80MHz Seg1 and BW 80MHz Seg4 are discontinuous with each other in the frequency domain.

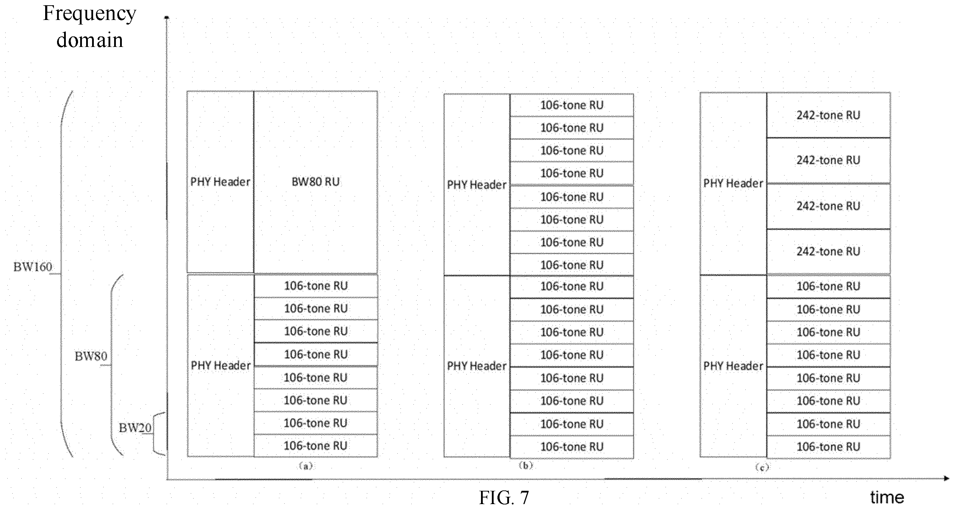

For example, as shown in (a) of FIG. 7, the protocol data unit PPDU contains two data segments of BW 80MHz, only one of which is subject to the frequency domain resource duplication.

In some embodiments, when 1<M, pieces of size information of resource units RUs used for different data segments are the same or different.

Specifically, as shown in (b) of FIG. 7, a PPDU that contains two data segments of BW 80MHz is taken as an example. Both of the two data segments of BW 80MHz are selected to be subject to frequency domain resource duplication in units of a 106-tone RU, that is, pieces of size information of resource units RUs used by the two different data segments are the same. However, as shown in (c) of FIG. 7, a PPDU that contains two data segments of BW 80MHz is taken as an example. One BW 80MHz Seg1 is selected to be subject to frequency domain resource duplication in units of a 106-tone RU, and the other BW 80MHz Seg2 is selected to be subject to frequency domain resource duplication in units of a 242-tone RU. Pieces of size information of resource units RUs used by two different data segments are different. When multiple data segments in the protocol data unit PPDU are subject to frequency domain resource duplication in units of the resource unit RU, the frequency domain resource duplication can be performed in units of a 106-tone RU and/or a 242-tone RU and/or a 484-tone RU. The description is not limited thereto.

In some embodiments, when the frequency domain resource duplication is performed on the M data segments in the protocol data unit PPDU in units of the resource unit RU, a frequency domain resource duplication is performed on a single data segment in units of a resource unit RU with at least one piece of size information.

Specifically, when one data segment in a protocol data unit PPDU is subject to frequency domain resource duplication in units of a resource unit RU, a resource unit RU with only one piece of size information can be selected as a unit for the frequency domain resource duplication of the single data segment. As an example, a 106-tone RU or 242-tone RU or 484-tone RU is only selected as the unit for the frequency domain resource duplication. As another example, multiple resource units RUs with different pieces of size information can be selected for the frequency domain resource duplication of a single data segment. That is, a single data segment is subject to the frequency domain resource duplication in units of some or all of a 106-tone RU, a 242-tone RU, and a 484-tone RU. For example, a part of the single data segment is subject to frequency domain resource duplication in units of a 106-tone RU, and a part of the single data segment is subject to the frequency domain resource duplication in units of a 242-tone RU.

In some embodiments, the protocol data unit PPDU includes preamble puncture information. Before the performing the frequency domain resource duplication on the protocol data unit PPDU in units of the resource unit RU, the method further includes determining usable size information of the resource unit RU based on the preamble puncture information.

Specifically, the preamble puncture mode is a mode in the current 802.11 protocol. In the current 802.11 protocol, the preamble puncture mode will affect the selection of usable size information of the resource unit RU. When the preamble puncture mode exists, the range and combination of usable size information of the resource unit RU will be greatly limited. Therefore, the usable size information in the preamble puncture mode needs to be considered. The 802.11 DUP PPDU format that is obtained after duplication in this application can be used together with the preamble puncture mode defined in the current 802.11 protocol, and for 802.11 DUP PPDU, the usable size information for frequency domain resource duplication of each data segment should be selected according to the current frequency band. The bandwidth of PPDU being BW 80MHz is taken as an example. When only one data segment of BW 20MHz is punched, the usable size information for the frequency domain resource duplication can be selected as a 106-tone RU and/or a 242-tone RU. When two data segments of BW 20MHz are punched, the usable size information for frequency domain resource duplication can be selected as a 106-tone RU and/or a 242-tone RU. When three data segments of BW20MHz are punched, the usable size information for frequency domain resource duplication can be selected as a 106-tone RU.

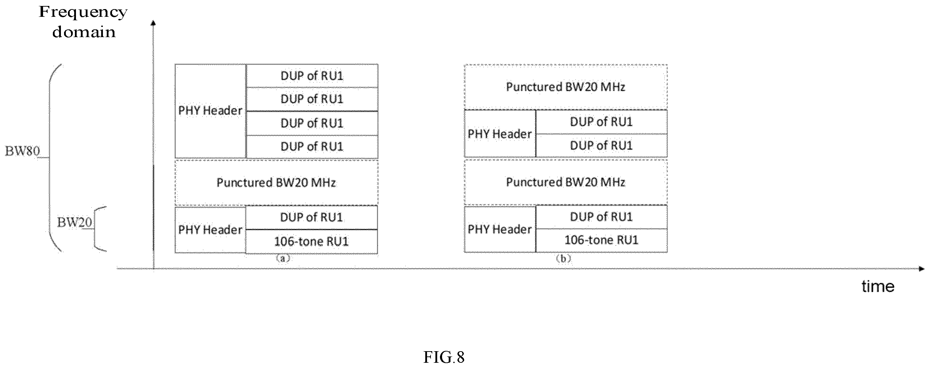

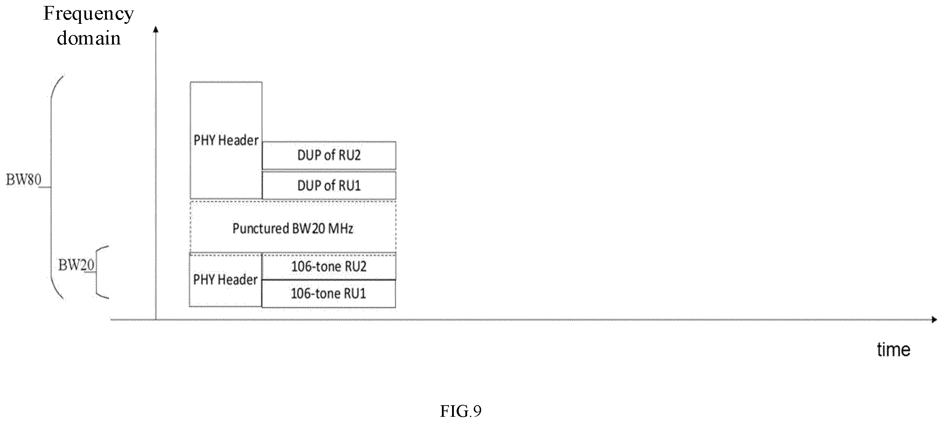

For example, FIG.8 is a schematic diagram of two 802.11 DUP PPDUs of BW 80MHz with the preamble puncture mode. Resource units RUs are not divided into groups. In (a) of FIG. 8, there is one data segment of BW 20MHz that is punched; and in (b) of FIG. 8, there are two data segments of BW 20MHz that are punched. FIG.9 is a schematic diagram of one 802.11 DUP PPDU of BW 80MHz with the preamble puncture mode. The resource units RUs are divided in such a way that a 106-tone RU is a a unit group. In order to comply with the preamble puncture mode, only two 106-tone RUs are reserved for use.

In some embodiments, a bandwidth occupied by the protocol data unit PPDU is greater than or equal to BW 80MHz.

In some embodiments, the method of the present disclosure can be applied to: a) downlink transmission from an AP device to an STA device, and/or uplink transmission from the STA device to the AP device; and b) single user (SU) PPDU transmission between the AP device and the STA device, and/or a multi-user (MU) PPDU transmission between the AP device and the STA device.

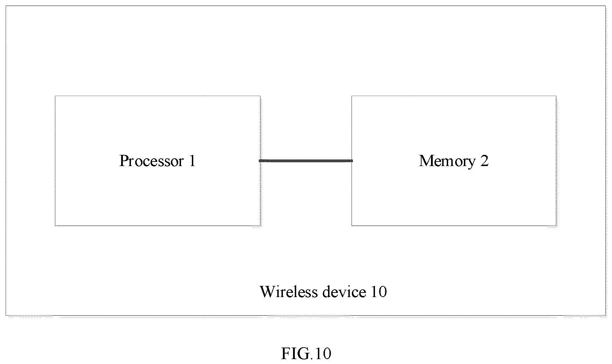

An embodiment in a second aspect of the present disclosure provides a wireless device 10. As shown in FIG.10, the wireless device 10 includes at least one processor 1 and a memory 2 in communicative connection with the at least one processor 1.

The memory 2 stores a computer program that is executable by the at least one processor 1. When the computer program is executed by the at least one processor 1, the wireless communication method according to any of the above embodiments is implemented.

In the wireless device 10 according to the embodiment of the present disclosure, the computer program is executed by the processor so as to implement the wireless communication method in any of the above embodiments. It can effectively solve the problem of narrowband interference caused by HB BLE devices on the the Wi-Fi receiving end.

An embodiment in a third aspect of the present disclosure provides a computer storage medium, in which a computer program is stored. When the computer program is executed by the processor, the wireless communication method according to any of the above embodiments is implemented.

In the description of this disclosure, any process or method description shown in a flowchart or described in other ways herein can be understood to mean that it includes one or more modules, fragments, or parts of codes of executable instructions for implementing customized logic functions or steps of the process. The scope of the embodiments of the present disclosure includes additional implementations which may not perform functions in the order shown or discussed, including a substantially simultaneous manner or in the reverse order according to involved functions, which should be understood by those skilled in the art to which the embodiments of the present disclosure belong.

The logic and/or steps represented in the flowchart or described in other ways herein, for example, can be considered as a sequenced list of executable instructions for implementing logic functions, and can be embodied in any computer-readable medium for use by an instruction execution system, device, or apparatus (such as a computer-based system, system including a processor, or other system that can fetch and execute instructions from the instruction execution system, device, or apparatus), or for use in combination with the instruction execution system, device or apparatus. For the purposes of the description, a "computer-readable medium" can be any device that can contain, store, communicate, propagate, or transmit a program for use by an instruction execution system, device, or apparatus or for use in combination with the instruction execution system, device, or apparatus. More specific examples (non-exhaustive list) of the computer-readable medium include an electrical connection (electronic apparatus) with one or more wiring, a portable computer disk case (a magnetic device), a Random Access Memory (RAM), a Read-Only Memory (ROM), an Erasable and Programmable Read-Only Memory (EPROM or flash memory), a fiber optic device, and a portable Compact Disk Read-Only Memory (CDROM). In addition, the computer-readable medium may even be paper or other suitable medium on which the program can be printed, because for example the paper or the other medium can be optically scanned, and then be edited, interpreted, or processed in other suitable manner if necessary to obtain the program electronically and the the program can be stored in a computer memory.

It should be understood that each part of the present disclosure can be implemented by hardware, software, firmware or a combination thereof. In the above embodiments, multiple steps or methods can be implemented by software or firmware stored in a memory and executed by a suitable instruction execution system. For example, if it is implemented by hardware as in another embodiment, it can be implemented by any one of or a combination of the following technologies well known in the art: discrete logic circuits having logic gate circuits for implementing logic functions on data signals, application specific integrated circuits with a suitable combination of logic gate circuits, programmable gate array (PGA), field programmable gate array (FPGA), etc.

A person of ordinary skill in the art can understand that all or part of the steps in the method of any of the foregoing embodiments can be completed by a program instructing relevant hardware. The program can be stored in a computer-readable storage medium. When the program is executed, it implements one of the steps or any combination thereof in the method in any of the embodiments.

In addition, the functional units in the various embodiments of the present disclosure may be integrated in one processing module, or each functional unit may exist alone physically, or two or more units may be integrated into one module. The above-mentioned integrated module can be implemented in the form of hardware or software functional module. If the integrated module is implemented in the form of a software function module and sold or used as an independent product, it can also be stored in a computer-readable storage medium.

The aforementioned storage medium may be a read-only memory, a magnetic disk or an optical disk, etc. Although the embodiments of the present disclosure have been shown and described above, it can be understood that the above-mentioned embodiments are exemplary and should not be construed as limiting the present disclosure. Those of ordinary skill in the art can make changes, modifications, substitutions, and variations to the above embodiments within the range of the present disclosure.

In the illustration of this description, an illustration with reference to the terms "one embodiment", "some embodiments", "illustrative embodiments", "an example", "a particular example" or "some examples" and so on mean that a particular feature, structure, material, or characteristic described in connection with the embodiment(s) or example(s) is included in at least one embodiment or example of the present disclosure. In this description, the exemplary expressions of the above terms do not necessarily specify the same embodiments or examples.

Although embodiments of the present disclosure have been shown and described, it will be understood by those skilled in the art that various changes, modifications, alternations and variations may be made to these embodiments without departing from the principles and spirit of the present disclosure, the scope of which is defined by the claims and their equivalents.

## Claims

1. A wireless communication method, comprising:
generating a protocol data unit PPDU; and
performing a frequency domain resource duplication on the protocol data unit PPDU in units of a resource unit RU to obtain a final protocol data unit PPDU.

2. The wireless communication method according to claim 1, wherein the protocol data unit PPDU at least comprises a data field, said performing the frequency domain resource duplication on the protocol data unit PPDU in units of the resource unit RU comprises:
performing a frequency domain resource duplication the data field in units of the resource unit RU.

3. The wireless communication method according to claim 1 or 2, wherein the resource unit RU comprises a resource unit RU with size information of 106, a resource unit RU with size information of 242, and/or a resource unit RU with size information of 484.

4. The wireless communication method according to any one of claims 1 to 3, wherein when the frequency domain resource duplication is performed on the protocol data unit PPDU in units of the resource unit RU, data duplicated in each resource unit RU is the same.

5. The wireless communication method according to any one of claims 1 to 4, wherein the wireless communication method is applied in a wireless device, the wireless device is distributed with multiple resource units RUs, said performing the frequency domain resource duplication on the protocol data unit PPDU in units of the resource unit RU comprises dividing the multiple resource units RUs into groups, data duplicated in each resource unit RU in each group being the same.

6. The wireless communication method according to claim 5, wherein all resource units RUs in each group are continuous with each other in frequency domain.

7. The wireless communication method according to claim 5, wherein all resource units RUs in each group are discontinuous with each other in frequency domain.

8. The wireless communication method according to any one of claims 5 to 7, said dividing the multiple resource units RUs into groups comprises:
dividing the multiple resource units RUs into groups according to size information of the resource units RUs.

9. The wireless communication method according to claim 2, wherein the wireless communication method is applied in a wireless device, the data field comprises N data segments, a bandwidth occupied by each data segment is a working bandwidth of the wireless device, said performing the frequency domain resource duplication on the protocol data unit PPDU in the the unit of the resource unit RU comprises:
performing a frequency domain resource duplication on M data segments in the protocol data unit PPDU in units of the resource unit RU, where 1≤M≤N.

10. The wireless communication method according to claim 9, wherein when 1<M, pieces of size information of resource units RUs used for different data segments are the same or different.

11. The wireless communication method according to claim 10, wherein when the frequency domain resource duplication is performed on the M data segments in the protocol data unit PPDU in units of the resource unit RU, a frequency domain resource duplication is performed on a single data segment in units of a resource unit RU with at least one piece of size information.

12. The wireless communication method according to any one of claims 1 to 11, wherein the protocol data unit PPDU comprises preamble puncture information, the method further comprises: before said performing the frequency domain resource duplication on the protocol data unit PPDU in units of the resource unit RU,
determining usable size information of the resource unit RU based on the preamble puncture information.

13. The wireless communication method according to any one of claims 1 to 12, wherein a bandwidth occupied by the protocol data unit PPDU is greater than or equal to BW 80MHz.

14. A wireless device, comprising:
at least one processor; and
a non-transitory memory in communicative connection with the at least one processor;
wherein the non-transitory memory stores a computer program that is executable by the at least one processor, the computer program when executed by the at least one processor, implements the wireless communication method of any one of claims 1 to 13.

15. A computer storage medium in which a computer program is stored, wherein the computer program when executed by a processor implements the wireless communication method of any one of claims 1 to 13.
